(19) Europäisches Patentamt
European Patent Office
Office européen des brevets

(11) **EP 3 178 688 B1**

(12) **FASCICULE DE BREVET EUROPEEN**

(45) Date de publication et mention
de la délivrance du brevet:
**04.09.2019 Bulletin 2019/36**

(21) Numéro de dépôt: **16202652.0**

(22) Date de dépôt: **07.12.2016**

(51) Int Cl.:
*B60K 35/00* *(2006.01)*          *B60K 37/04* *(2006.01)*
*G09G 3/34* *(2006.01)*          *B60Q 3/14* *(2017.01)*
*B60Q 3/18* *(2017.01)*

(54) **EQUIPEMENT INTÉRIEUR DE VÉHICULE ÉQUIPÉ D'UN ÉCRAN, PROCÉDÉ DE GESTION CORRESPONDANT**

INNENAUSSTATTUNG EINES FAHRZEUGS, DIE MIT EINEM BILDSCHIRM VERSEHEN IST, UND ENTSPRECHENDES STEUERUNGSVERFAHREN

INTERIOR EQUIPMENT OF A VEHICLE PROVIDED WITH A SCREEN, CORRESPONDING MANAGEMENT METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.12.2015 FR 1562008**

(43) Date de publication de la demande:
**14.06.2017 Bulletin 2017/24**

(73) Titulaire: **Faurecia Intérieur Industrie 92000 Nanterre (FR)**

(72) Inventeur: **BENCHIKHI, Zakaria 75018 Paris (FR)**

(74) Mandataire: **Lavoix 2, place d'Estienne d'Orves 75441 Paris Cedex 09 (FR)**

(56) Documents cités:
**DE-A1-102004 010 286     FR-A1- 2 824 510**

**Description**

L'invention concerne en général les équipements intérieurs de véhicules équipés d'écrans électroniques d'affichage.

Plus précisément, l'invention concerne selon un premier aspect un équipement intérieur de véhicule selon le préambule de la revendication 1.

Un tel équipement est connu de DE 10 2004 010286 A1.

FR 2 824 510 A1 décrit une planche de bord avec une peau souple translucide, et une couche de mousse translucide sous la peau. Quand un voyant est allumé, seule une inscription relative à une fonction à afficher apparaît à travers la mousse.

Les constructeurs automobiles imposent que les écrans électroniques d'affichage soient invisibles quand ils sont inactifs. Un tel effet est connu sous le terme d'effet « black panel », c'est-à-dire panneau noir. En effet, l'écran éteint présente une surface uniforme noire, qui se fond dans la surface externe quand celle-ci porte un décor noir uni.

En revanche, le camouflage de l'écran est difficile à réaliser quand la surface externe ne porte pas un décor noir uni.

Dans ce contexte, l'invention vise à proposer un équipement intérieur de véhicule dans lequel l'écran électronique d'affichage peut être camouflé même si la surface externe porte un décor qui n'est pas noir uni.

A cette fin, l'invention porte sur un équipement intérieur de véhicule selon la revendication 1.

Du fait que l'image décorative est coordonnée avec le décor visible porté par la zone de bord, les passagers ne voient pas de discontinuité entre le décor de la zone de bord et l'écran. L'écran électronique d'affichage est donc camouflé.

Le décor visible de la zone de bord est de tout type. Il est par exemple uni ou coloré, ou comporte des motifs de toute sorte, colorés ou non colorés. Le décor visible est par exemple figuratif, ou en variante est non figuratif.

Ainsi, il est particulièrement facile d'adapter l'écran électronique d'affichage à différents modèles de véhicule, dont les surfaces externes sont décorées de différentes façons. Il suffit pour cela d'enregistrer dans la mémoire du dispositif de gestion de l'écran électronique d'affichage une image décorative coordonnée avec le décor prévu pour la surface externe. Ceci est rapide et facile.

L'équipement intérieur de véhicule peut également présenter une ou plusieurs des caractéristiques des revendications 2 à 7.

Selon un second aspect, l'invention porte sur un procédé de gestion d'un équipement intérieur ayant les caractéristiques ci-dessus, selon la revendication 8.

Selon un troisième aspect, l'invention porte sur un autre procédé de gestion d'un équipement intérieur ayant les caractéristiques ci-dessus, selon la revendication 9.

D'autres caractéristiques et avantages de l'invention ressortiront de la description détaillée qui en est donnée ci-dessous, à titre indicatif et nullement limitatif, en référence aux figures annexées, parmi lesquelles :

- la figure 1 est une représentation schématique simplifiée d'une partie d'un équipement intérieur de véhicule selon l'invention, l'écran étant représenté à l'état de veille ;
- la figure 2 est une vue en coupe, simplifiée, d'un mode de réalisation de l'équipement intérieur de l'invention.

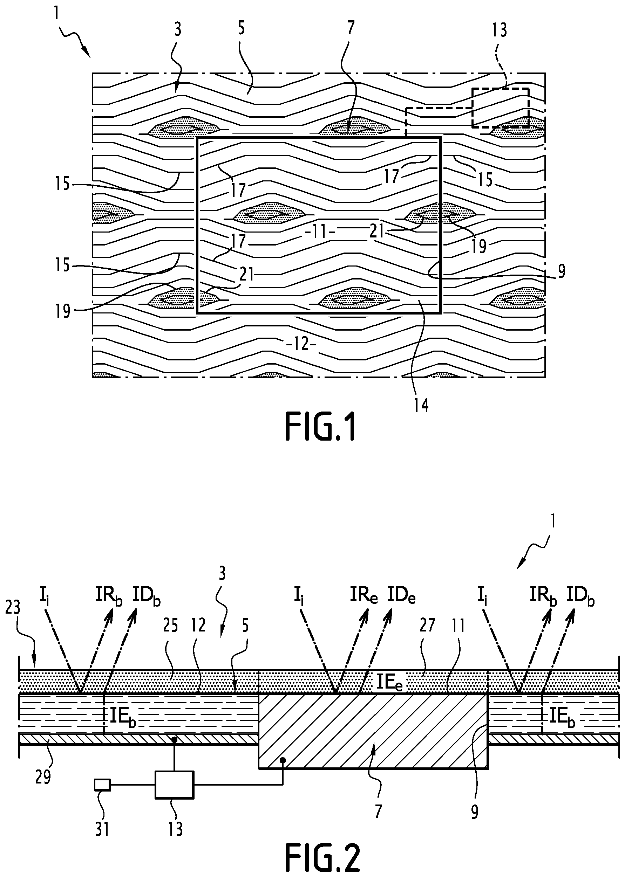

L'équipement intérieur 1 représenté sur la figure 1 est typiquement une planche de bord de véhicule. Le véhicule est un véhicule automobile, par exemple une voiture ou un camion.

En variante, l'équipement intérieur est une garniture d'un ouvrant du véhicule ou une console centrale, ou tout autre équipement destiné à être implanté dans l'habitacle du véhicule.

L'équipement intérieur 1 comprend une structure 3 ayant une surface externe 5 visible par les passagers du véhicule, et un écran électronique d'affichage 7.

La structure 3 est par exemple la coiffe de la planche de bord. La surface externe 5 est tournée vers l'habitacle du véhicule.

Une fenêtre 9 est découpée dans la surface externe 5, l'écran électronique d'affichage 7 étant placé dans la fenêtre 9.

Typiquement, l'écran électronique d'affichage 7 est placé sous la surface externe 5, c'est-à-dire vers l'intérieur de la structure 3. L'écran électronique d'affichage 7 comprend une zone active d'affichage 11 avec une matrice de pixels, cette zone 11 s'inscrivant dans la fenêtre 9. Il comprend également d'autres organes, qui sont cachés sous la zone active 11 ou sous la surface externe 3.

La fenêtre 9 est typiquement à contour fermé et présente toute forme adaptée, par exemple une forme rectangulaire. La zone active 11 a sensiblement la même forme et les mêmes dimensions que la fenêtre 9.

La surface externe 5 comporte une zone de bord 12, qui entoure la fenêtre 9. La zone de bord 12 jouxte la fenêtre 9 et s'étend jusqu'à la fenêtre 9, tout autour de celle-ci.

La zone de bord 12 porte un décor visible, qui est de tout type. Ce décor est par exemple unicolore, ou bicolore, ou comporte plusieurs couleurs. Il est par exemple uni, ou au contraire comporte des motifs. Les motifs sont figuratifs ou au contraire non figuratifs.

Par exemple, le décor imite le bois ou un autre matériau tel que le cuir.

Le décor est réalisé de toute manière adaptée, en utilisant des inserts en matière plastique, ou une couche de vrai bois etc.

L'équipement intérieur 1 comporte encore un dispositif 13 de gestion de l'écran électronique d'affichage 7. Ce dispositif de gestion 13 comprend par exemple une unité de traitement d'informations formée d'un processeur et d'une mémoire associée au processeur, ou comprend des composants logiques programmables tels que des FPGA (Field-Programmable Gâte Aray) ou encore des circuits intégrés dédiés tels que des ASIC (Application-Specific Integrated Circuit).

Le dispositif de gestion 13 est configuré pour piloter l'écran électronique d'affichage 7. Plus précisément, il est configuré pour sélectivement placer l'écran électronique d'affichage 7 dans un état actif dans lequel des informations sont affichées sur l'écran électronique d'affichage 7, ou dans un état de veille.

Les informations sont affichées sur la zone active 11 de l'écran. Elles concernent par exemple le fonctionnement du véhicule (vitesse du véhicule, vitesse de rotation du moteur, volume d'essence restant dans le réservoir, température du liquide de refroidissement du moteur ...). En plus ou en variante, les informations affichées comportent des avertissements concernant le fonctionnement ou l'état du véhicule. En variante ou en plus, les informations concernent le fonctionnement ou l'état de certains circuits du véhicule, tel que le circuit de ventilation ou d'air conditionné pour l'habitacle du véhicule. Ces informations, en plus ou en variante, concernent l'environnement du véhicule : température extérieure, heure etc.

Le dispositif de gestion 13 est configuré pour, à l'état de veille de l'écran électronique d'affichage 7, afficher une image décorative sur l'écran électronique d'affichage 7, cette image décorative étant coordonnée avec le décor visible de la zone de bord 12.

Plus précisément, l'écran électronique d'affichage 7 présente une zone périphérique 14 adjacente à la zone de bord 12. Celte zone 14 correspond à la périphérie de la zone active 11. Elle s'étend tout autour de la zone active 11.

L'image décorative est choisie pour qu'au moins la zone périphérique 14 de l'écran 7 et la zone de bord 12 se confondent visuellement.

L'image décorative est choisie de préférence pour rendre l'écran électronique d'affichage 7 invisible pour les passagers du véhicule.

L'image décorative s'inscrit et est dans la continuité du décor visible porté par la zone de bord. Typiquement, quand le décor visible comporte des lignes 15 s'étendant jusqu'au bord de la fenêtre 9, l'image décorative comporte d'autres lignes 17 prolongeant les lignes 15. Quand le décor visible comporte des tâches de couleur 19 s'étendant jusqu'au bord de la fenêtre 9, l'image décorative comporte d'autres tâches 21, de la même couleur ou sensiblement de la même couleur que les tâches 19, qui jouxtent et prolongent les tâches de couleur 19.

Si le décor visible de la zone de bord 12 est une partie d'une image figurative, l'image décorative comporte une autre partie de la même image figurative, à la manière d'une pièce de puzzle.

De préférence, le décor visible est de type aléatoire. En d'autres termes, il comporte des motifs qui ne sont pas disposés selon un agencement régulier. De préférence, il comporte un grand nombre de couleurs. Dans ce cas, l'image décorative est elle aussi aléatoire et comporte de préférence elle aussi un grand nombre de couleurs différentes. Ce type de décor facilite le camouflage de l'écran électronique d'affichage 7 au sein de la surface externe 12.

Avantageusement, le dispositif de gestion 13 stocke une pluralité d'images décoratives différentes les unes des autres, chacune susceptible d'être affichée sur l'écran électronique d'affichage 7 à l'état de veille.

Une ou plusieurs des images décoratives sont choisies pour rendre l'écran électronique d'affichage 7 invisible, comme décrit ci-dessus. Par exemple, d'autres images décoratives ne sont pas choisies pour rendre l'écran d'affichage invisible, mais plutôt pour donner une apparence attractive à la surface externe 5.

Dans ce cas, le dispositif de gestion 13 comporte avantageusement une interface utilisable par les passagers du véhicule, et permettant de choisir l'image ou les images décoratives affichées pendant l'état de veille de l'écran d'affichage.

L'équipement intérieur 1 est agencé pour que la luminosité de la surface externe 5 soit proche de ou identique à la luminosité de l'écran électronique d'affichage 7, quand cet écran est à l'état de veille.

Pour ce faire, selon l'invention et un premier mode de réalisation, l'équipement intérieur 1 comprend un film optique 23 ayant au moins une première zone 25 couvrant la zone de bord 12, et une seconde zone 27 couvrant l'écran électronique d'affichage 7.

Le film optique 23 est en une matière translucide, par exemple une matière plastique. La première zone 25 a un premier taux de transmission de la lumière, et la seconde zone 27 a un second taux de transmission de la lumière inférieur au premier taux de transmission de la lumière.

Le film optique 23 peut comprendre en outre un revêtement supplémentaire. Ce revêtement supplémentaire ayant des propriétés optiques et/ou mécaniques, telles que anti-reflet, anti-rayure.

En effet, au niveau de l'écran électronique d'affichage 7, l'intensité de la lumière émise correspond à la somme de deux termes : l'intensité de la lumière émise par l'écran et transmise à travers le film décoratif, et l'intensité de la lumière incidente réfléchie par l'écran. Au niveau de la zone de bord 12, dans le premier mode de réalisation de l'invention, l'intensité de la lumière émise par la zone de bord 12 correspond à l'intensité du rayonnement incident réfléchi par la zone de bord 12. Si on note $I_i$ l'intensité du rayonnement incident, $IR_b$ l'intensité du rayonnement réfléchi par la zone de bord 12, $IR_e$ l'intensité du rayonnement réfléchi par l'écran, $IE_e$ l'intensité de la lumière émise par l'écran, et $ID_e$ l'intensité de la lumière diffusée par l'écran dans l'habitacle du véhicule, il est possible d'écrire les équations suivantes :

$$IR_b = I_i \, (t_b t_{rb} t_b) \qquad (1)$$

$$IR_e = I_i \, (t_e t_{re} t_e) \qquad (2)$$

$$ID_e = IE_e \, (t_e) \qquad (3)$$

où $t_b$ est le premier taux de transmission de la lumière, $t_e$ est le second taux de transmission de la lumière, $t_{rb}$ est le taux de réflexion de la lumière sur la surface de bord et le $t_{re}$ est le taux de réflexion de la lumière sur l'écran.

On voit que diminuer le second taux de transmission de la lumière $t_e$ par rapport au premier taux de transmission de la lumière $t_b$ conduit à diminuer les termes $IR_e$ et $ID_e$ par rapport au terme $IR_b$. En d'autres termes, réduire le second taux de transmission de la lumière permet de rapprocher l'une de l'autre la luminosité de l'écran et la luminosité de la zone de bord.

Les différentes intensités mentionnées ci-dessus sont toutes des intensités par unité de surface.

En plus du fait d'avoir un film optique ayant un taux de transmission de la lumière réduit au droit de l'écran, dans un second mode de réalisation, l'écran électronique d'affichage 7 est avantageusement de type papier électronique.

Le papier électronique est également appelé encre électronique ou « E-paper » en anglais. Cette technique d'affichage est connue, et ne sera donc pas décrite en détail ici. Il suffit de préciser que cette technique d'affichage ne nécessite pas d'énergie pour laisser un texte ou une image affichée. Contrairement aux techniques d'affichage classiques, le papier électronique est purement réflectif et utilise la lumière ambiante de la même manière que le papier classique. Ainsi, le terme $ID_e$ est nul ou sensiblement nul quand l'écran est de type papier électronique.

En variante, l'écran électronique d'affichage est d'un autre type : LED, ou de tout autre type adapté.

En plus d'avoir un film optique ayant un taux de transmission de lumière réduit au droit de l'écran et optionnellement d'avoir un écran électronique du type papier électronique, dans un troisième mode de réalisation, l'équipement intérieur 1 comprend une source lumineuse 29 placée sous la surface externe 5 et agencée pour diffuser un rayonnement lumineux à travers la surface externe 5.

La source lumineuse 29 est de tout type adapté. Par exemple, c'est un réseau de fibres optiques, ou un guide de lumière, ou une pluralité de diodes, etc.

La source lumineuse 29 est agencée de manière à diffuser un rayonnement lumineux à travers la zone de bord 12. Par exemple, le rayonnement lumineux est sensiblement uniforme sur toute la zone de bord 12.

Dans un autre mode de réalisation, le rayonnement lumineux n'est pas uniforme. Le rayonnement lumineux est maximal au niveau de la fenêtre 7 et décroît en s'éloignant de la fenêtre 7 le long de la zone de bord 12.

Dans ce cas, la surface externe 5 est dans un matériau choisi pour permettre la transmission du rayonnement lumineux. Par exemple, la surface externe 5 est un matériau translucide, avec un fort taux d'absorption de la lumière.

Le dispositif de gestion 13 est configuré pour piloter la source lumineuse 29, de telle sorte que la source lumineuse 29 diffuse dans le véhicule une première intensité lumineuse diffusée de bord quand l'écran électronique d'affichage 7 est dans son état actif, et une seconde intensité lumineuse diffusée de bord supérieure à la première quand l'écran électronique d'affichage 7 est dans son état de veille.

Typiquement, la source lumineuse 29 est éteinte à l'état actif de l'écran électronique d'affichage 7, la première intensité lumineuse diffusée de bord étant donc nulle.

En revanche, la seconde intensité lumineuse diffusée de bord est non nulle. Ainsi, on augmente l'intensité lumineuse émise par la zone de bord 12, ce qui permet de compenser l'intensité lumineuse émise par l'écran à l'état de veille.

Selon une variante du troisième mode de réalisation, le dispositif de gestion 13 est configuré pour, au moins à l'état de veille de l'écran électronique d'affichage, mettre en oeuvre le procédé suivant :

- estimer l'intensité $IR_b$ de la lumière réfléchie par la zone de bord 12 ;
- estimer l'intensité $IR_e$ de la lumière réfléchie par l'écran électronique d'affichage 7;
- contrôler l'écran électronique d'affichage 7 pour que celui-ci diffuse dans le véhicule une intensité lumineuse diffusée d'écran $ID_e$ déterminée ;
- contrôler la source lumineuse pour que celle-ci diffuse dans le véhicule une intensité lumineuse diffusée de bord $ID_b$ déterminée.

L'intensité lumineuse diffusée d'écran $ID_e$ et l'intensité lumineuse diffusée de bord $ID_b$ sont choisies pour que la relation suivante soit vérifiée :

$$| (IR_e + ID_e) - (IR_b + ID_b) | \leq 10\% (IR_b + ID_b) \qquad (4)$$

En d'autres termes, le dispositif de gestion 13 pilote l'intensité lumineuse diffusée par l'écran électronique d'affichage 7 et l'intensité lumineuse diffusée par la source lumineuse 29, de manière à ce que l'écran électronique d'affichage 7 et la zone de bord 12 semblent émettre la même intensité lumineuse, vue par les passagers du véhicule.

L'intensité de la lumière réfléchie $IR_b$ par la zone de bord 12 est estimée de toute façon adaptée. Par exemple, l'équipement intérieur est équipé d'un capteur de luminosité 31. Celui-ci mesure l'intensité lumineuse incidente $I_i$ au niveau de la surface externe 5, et plus précisément au niveau de la zone de bord 12. Il communique cette valeur au dispositif de gestion 13.

Celui-ci en déduit l'intensité de la lumière réfléchie par la zone de bord $IR_b$ et l'intensité de la lumière réfléchie par l'écran électronique d'affichage $IR_e$ à l'aide des équations (1) et (2) indiquées ci-dessus.

Les valeurs de $t_b$, $t_{rb}$, $t_e$ et $t_{re}$ sont par exemple des paramètres enregistrés dans la mémoire du dispositif de gestion 13.

Le dispositif de gestion 13 contrôle l'intensité lumineuse diffusée d'écran $ID_e$ à l'aide de l'équation (3) déterminée ci-dessus. Il choisit l'intensité lumineuse émise par l'écran $IE_e$ pour obtenir la valeur recherchée de $ID_e$, $t_e$ étant un paramètre enregistré dans la mémoire du dispositif de gestion 13.

De même, le dispositif de gestion 13 contrôle l'intensité lumineuse diffusée de bord $ID_b$ à l'aide de l'équation suivante :

$$ID_b = IE_b \, t_b \, t_s$$

où $t_b$ est le taux de transmission de la lumière à travers la première zone du film optique, et $t_s$ est le taux de transmission de la lumière à travers la surface externe 5, et plus précisément à travers la zone de bord 12. $IE_b$ est l'intensité lumineuse émise par la source lumineuse 29. $t_b$ et $t_s$ sont des paramètres numériques enregistrés dans la mémoire du dispositif de gestion 13.

En variante, l'intensité lumineuse diffusée d'écran et l'intensité lumineuse diffusée de bord sont choisies pour que la relation suivante soit vérifiée :

$$| (IR_e + ID_e) - (IR_b + ID_b) | \leq 5\% (IR_b + ID_b)$$

$$| (IR_e + ID_e) - (IR_b + ID_b) | \leq 1\% (IR_b + ID_b)$$

Quand l'équipement intérieur 1 ne comprend pas de film optique 23, les équations (1) à (4) s'appliquant toujours, mais $t_e$ et $t_b$ sont égales à 1.

Un quatrième mode de réalisation de l'invention va maintenant être décrit. Il est susceptible d'être utilisé en plus des premier et/ou second et/ou troisième modes de réalisation, ou à la place des second et/ou troisième modes de réalisation.

Selon le quatrième mode de réalisation, le dispositif de gestion 13 est configuré pour, au moins à l'état de veille de l'écran électronique d'affichage 7, mettre en oeuvre le procédé suivant :

- estimer une intensité lumineuse réfléchie $IR_b$ par la zone de bord 12 ;
- estimer une intensité de lumière réfléchie $IR_e$ par l'écran électronique d'affichage 7;
- contrôler l'écran électronique d'affichage 7 pour que celui-ci diffuse dans le véhicule une intensité lumineuse diffusée

d'écran $ID_e$ déterminée.

L'intensité lumineuse diffusée $ID_e$ est choisie pour que la relation suivante soit vérifiée :

$$| (IR_e + ID_e) - (IR_b) | \leq 10\% \, (IR_b).$$

De préférence, cette intensité lumineuse diffusée d'écran est choisie pour que la relation suivante soit vérifiée :

$$| (IR_e + ID_e) - (IR_b) | \leq 5\% \, (IR_b)$$

ou encore de préférence pour que la relation suivante soit vérifiée :

$$| (IR_e + ID_e) - (IR_b) | \leq 1\% \, (IR_b).$$

L'intensité de lumière réfléchie par la zone de bord $IR_b$ et l'intensité de lumière réfléchie par l'écran électronique d'affichage $IR_e$ sont déterminées comme précédemment, par calcul en utilisant les équations (1) et (2) ci-dessus. L'intensité de lumière incidente $I_i$ est déterminée comme précédemment, par exemple à l'aide d'un capteur 31.
L'intensité lumineuse diffusée d'écran $ID_e$ est déterminée comme précédemment, par calcul, en utilisant l'équation (3) ci-dessus. Le dispositif de gestion 13 contrôle l'écran électronique d'affichage 7 pour que celui-ci émettre une intensité lumineuse émise $IE_e$ permettant d'obtenir la valeur de $ID_e$ recherchée.

## Revendications

1. Equipement intérieur de véhicule, l'équipement intérieur (1) comprenant :

   - une structure (3) ayant une surface externe (5) visible, une fenêtre (9) étant découpée dans la surface externe (5), la fenêtre (9) étant entourée par une zone de bord (12) de la surface externe (5) ;
   - un écran électronique d'affichage (7) placé dans la fenêtre (9) et présentant une zone périphérique (14) adjacente à la zone de bord (12);
   - un dispositif (13) de gestion de l'écran électronique d'affichage (7) ;

   la zone de bord (12) portant un décor visible, le dispositif de gestion (13) étant configuré pour sélectivement placer l'écran électronique d'affichage (7) dans un état actif dans lequel des informations sont affichées sur l'écran électronique d'affichage (7), ou dans un état de veille dans lequel une image décorative est affichée sur l'écran électronique d'affichage (7) ;
   l'image décorative étant coordonnée avec le décor visible pour qu'au moins la zone périphérique (14) de l'écran électronique d'affichage (7) et la zone de bord (12) se confondent visuellement, **caractérisé en ce que** l'équipement intérieur (1) comprend un film optique (23) ayant au moins une première zone (25) couvrant la zone de bord (12) et une seconde zone (27) couvrant l'écran électronique d'affichage (7), la première zone (25) ayant un premier taux de transmission de la lumière, la seconde zone (27) ayant un second taux de transmission de la lumière inférieur au premier taux de transmission de la lumière.

2. Equipement intérieur selon la revendication 1, **caractérisé en ce que** le dispositif de gestion (13) stocke une pluralité d'images décoratives différentes les unes des autres, chacune susceptible d'être affichée sur l'écran électronique d'affichage (7) à l'état de veille.

3. Equipement intérieur selon l'une quelconque des revendications précédentes, **caractérisé en ce que** l'écran électronique d'affichage (7) est de type papier électronique.

4. Equipement intérieur selon l'une quelconque des revendications précédentes, **caractérisé en ce que** l'équipement intérieur (1) comprend une source lumineuse (29) placée sous la surface externe (5) et agencée pour diffuser un rayonnement lumineux à travers la surface externe (5).

**5.** Equipement intérieur selon la revendication 4, **caractérisé en ce que** le dispositif de gestion (13) est configuré pour piloter la source lumineuse (29), de telle sorte que la source lumineuse (29) diffuse dans le véhicule une première intensité lumineuse diffusée de bord quand l'écran électronique d'affichage (7) est dans son état actif, et une seconde intensité lumineuse diffusée de bord ($ID_b$) supérieure à la première quand l'écran électronique d'affichage (7) est dans son état de veille.

**6.** Equipement intérieur selon la revendication 4 ou 5, **caractérisé en ce que** le dispositif de gestion (13) est configuré pour, au moins à l'état de veille de l'écran électronique d'affichage (7) :

- estimer une intensité de lumière réfléchie ($IR_b$) par la zone de bord (12) ;
- estimer une intensité de lumière réfléchie ($IR_e$) par l'écran électronique d'affichage (7) ;
- réguler l'écran électronique d'affichage (7) pour que celui-ci diffuse dans le véhicule une intensité lumineuse diffusée d'écran ($ID_e$) déterminée;
- réguler la source lumineuse (29) pour que celle-ci diffuse dans le véhicule une intensité lumineuse diffusée de bord ($ID_b$) déterminée;

l'intensité lumineuse diffusée d'écran ($ID_e$) et l'intensité lumineuse diffusée de bord ($ID_b$) étant choisies pour que la relation suivante soit vérifiée :

$$| (IR_e + ID_e) - (IR_b + ID_b) | \leq 10\% (IR_b + ID_b).$$

**7.** Equipement intérieur selon l'une quelconque des revendications 1 à 5, **caractérisé en ce que** le dispositif de gestion (13) est configuré pour, au moins à l'état de veille de l'écran électronique d'affichage (7) :

- estimer une intensité de lumière réfléchie ($IR_b$) par la zone de bord (12) ;
- estimer une intensité de lumière réfléchie ($IR_e$) par l'écran électronique d'affichage (7) ;
- réguler l'écran électronique d'affichage (7) pour que celui-ci diffuse dans le véhicule une intensité lumineuse diffusée d'écran ($ID_e$) déterminée ;

l'intensité lumineuse diffusée d'écran ($ID_e$) étant choisie pour que la relation suivante soit vérifiée :

$$| (IR_e + ID_e) - (IR_b) | \leq 10\% (IR_b).$$

**8.** Procédé de gestion d'un équipement intérieur selon l'une quelconque des revendications 4 à 6, **caractérisé en ce que** le procédé est mis en oeuvre au moins à l'état de veille de l'écran électronique d'affichage (7), et comprenant les étapes suivantes :

- estimation d'une intensité de lumière réfléchie ($IR_b$) par la zone de bord (12) ;
- estimation d'une intensité de lumière réfléchie ($IR_e$) par l'écran électronique d'affichage (7) ;
- régulation de l'écran électronique d'affichage (7) pour que celui-ci diffuse dans le véhicule une intensité lumineuse diffusée d'écran ($ID_e$) déterminée ;
- régulation de la source lumineuse (29) pour que celle-ci diffuse dans le véhicule une intensité lumineuse diffusée de bord ($ID_b$) déterminée ;

l'intensité lumineuse diffusée d'écran ($ID_e$) et l'intensité lumineuse diffusée de bord ($ID_b$) étant choisies pour que la relation suivante soit vérifiée :

$$| (IR_e + ID_e) - (IR_b + ID_b) | \leq 10\% (IR_b + ID_b).$$

**9.** Procédé de gestion d'un équipement intérieur selon l'une quelconque des revendications 1 à 5 ou 7, **caractérisé en ce que** le procédé est mis en oeuvre au moins à l'état de veille de l'écran électronique d'affichage (7), et comprenant les étapes suivantes :

- estimation d'une intensité de lumière réfléchie ($IR_b$) par la zone de bord (12) ;

- estimation d'une intensité de lumière réfléchie ($IR_e$) par l'écran électronique d'affichage (7) ;
- régulation de l'écran électronique d'affichage (7) pour que celui-ci émette dans le véhicule une intensité lumineuse diffusée d'écran ($ID_e$) déterminée ;

l'intensité lumineuse diffusée d'écran ($ID_e$) étant choisie pour que la relation suivante soit vérifiée :

$$| (IR_e + ID_e) - (IR_b) | \leq 10\% (IR_b).$$

**Patentansprüche**

1.  Inneneinrichtung eines Fahrzeugs, die Inneneinrichtung (1) aufweisend:

    - eine Struktur (3), welche eine sichtbare äußere Fläche (5) aufweist, wobei ein Fenster (9) in der äußeren Fläche (5) ausgeschnitten ist, wobei das Fenster (9) durch einen Randbereich (12) der äußeren Fläche (5) umgeben ist,
    - einen elektronischen Anzeigebildschirm (7), welcher in dem Fenster (9) platziert ist und welcher einen Umfangsbereich (14) aufweist, der zum Randbereich (12) benachbart ist,
    - eine Vorrichtung (13) zur Steuerung des elektronischen Anzeigebildschirms (7),

    wobei der Randbereich (12) ein sichtbares Dekor trägt, wobei die Vorrichtung zur Steuerung (13) dazu eingerichtet ist, selektiv den elektronischen Anzeigebildschirm (7) in einen aktiven Zustand, in welchem Informationen auf dem elektronischen Anzeigebildschirm (7) angezeigt werden, oder in einen Ruhezustand, in welchem ein dekoratives Bild auf dem elektronischen Anzeigebildschirm (7) angezeigt wird, zu versetzen, wobei das dekorative Bild mit dem sichtbaren Dekor abgestimmt ist, so dass sich zumindest der Umfangsbereich (14) des elektronischen Anzeigebildschirms (7) und der Randbereich (12) visuell entsprechen, **gekennzeichnet dadurch, dass** die Inneneinrichtung (1) einen optischen Film (23) aufweist, welcher mindestens eine erste Zone (25), die den Randbereich (12) bedeckt, und eine zweite Zone (27), die den elektronischen Anzeigebildschirm (7) bedeckt, aufweist, wobei die erste Zone (25) eine erste Lichtdurchlässigkeitsrate hat, wobei die zweite Zone (27) eine zweite Lichtdurchlässigkeitsrate hat, welche kleiner als die erste Lichtdurchlässigkeitsrate ist.

2.  Inneneinrichtung gemäß dem Anspruch 1, **gekennzeichnet dadurch, dass** die Vorrichtung zur Steuerung (13) eine Mehrzahl von zueinander unterschiedlichen dekorativen Bildern speichert, von welchen jedes auf dem elektronischen Anzeigebildschirm (7) in dem Ruhezustand angezeigt werden kann.

3.  Inneneinrichtung gemäß irgendeinem der vorhergehenden Ansprüche, **gekennzeichnet dadurch, dass** der elektronische Anzeigebildschirm (7) vom Elektronisches-Papier-Typ ist.

4.  Inneneinrichtung gemäß irgendeinem der vorhergehenden Ansprüche, **gekennzeichnet dadurch, dass** der elektronische Anzeigebildschirm (7) eine Lichtquelle (29) aufweist, welche unter der äußeren Fläche (5) angeordnet ist und eingerichtet ist, eine Lichtstrahlung durch die äußere Fläche (5) auszustrahlen.

5.  Inneneinrichtung gemäß dem Anspruch 4, **gekennzeichnet dadurch, dass** die Vorrichtung zur Steuerung (13) dazu eingerichtet ist, die Lichtquelle (29) derart zu steuern, dass die Lichtquelle (29) in das Fahrzeug eine erste, vom Rand ausgestrahlte Lichtintensität, wenn der elektronische Anzeigebildschirm (7) sich in seinem aktiven Zustand befindet, und, wenn der elektronische Anzeigebildschirm (7) sich in seinem Ruhezustand befindet, eine zweite, vom Rand ausgestrahlte Lichtintensität ($ID_b$), welche größer als die erste ist, ausstrahlt.

6.  Inneneinrichtung gemäß dem Anspruch 4 oder 5, **gekennzeichnet dadurch, dass** die Vorrichtung zur Steuerung (13) zumindest im Ruhezustand des elektronischen Anzeigebildschirms (7) eingerichtet ist zum:

    - Ermitteln einer Intensität eines durch den Randbereich (12) reflektierten Lichts ($IR_b$),
    - Ermitteln einer Intensität eines durch den elektronischen Anzeigebildschirm (7) reflektierten Lichts ($Ir_e$),
    - Regulieren des elektronischen Anzeigebildschirms (7), so dass dieser eine bestimmte, von dem Bildschirm ausgestrahlte Lichtintensität ($ID_e$) in das Fahrzeug ausstrahlt,
    - Regulieren der Lichtquelle (29), so dass diese eine bestimmte, von dem Rand ausgestrahlte Lichtintensität (ID$_b$) in das Fahrzeug ausstrahlt,

wobei die von dem Bildschirm ausgestrahlte Lichtintensität (ID$_e$) und die von dem Rand ausgestrahlte Lichtintensität (ID$_b$) ausgewählt sind, so dass die folgende Gleichung erfüllt wird:

$$| (IR_e + ID_e) - (IR_b + ID_b) | \leq 10\% (IR_b + ID_b).$$

7. Inneneinrichtung gemäß irgendeinem der Ansprüche 1 bis 5, **gekennzeichnet dadurch, dass** die Vorrichtung zur Steuerung (13) zumindest im Ruhezustand des elektronischen Anzeigebildschirms (7) eingerichtet ist zum:

  - Ermitteln einer Intensität eines durch den Randbereich (12) reflektierten Lichts (IR$_b$),
  - Ermitteln einer Intensität eines durch den elektronischen Anzeigebildschirm (7) reflektierten Lichts (Ir$_e$),
  - Regulieren des elektronischen Anzeigebildschirms (7), so dass dieser eine bestimmte, von dem Bildschirm ausgestrahlte Lichtintensität (ID$_e$) in das Fahrzeug ausstrahlt,

wobei die von dem Bildschirm ausgestrahlte Lichtintensität (ID$_e$) ausgewählt ist, so dass die folgende Gleichung erfüllt wird:

$$| (IR_e + ID_e) - (IR_b) | \leq 10\% (IR_b).$$

8. Verfahren zur Steuerung einer Inneneinrichtung gemäß irgendeinem der Ansprüche 4 bis 6, **gekennzeichnet dadurch, dass** das Verfahren zumindest im Ruhezustand des elektronischen Anzeigebildschirms (7) durchgeführt wird und aufweisend die folgenden Schritte:

  - Ermitteln einer Intensität eines durch den Randbereich (12) reflektierten Lichts (IR$_b$),
  - Ermitteln einer Intensität eines durch den elektronischen Anzeigebildschirm (7) reflektierten Lichts (Ir$_e$),
  - Regulieren des elektronischen Anzeigebildschirms (7), so dass dieser eine bestimmte, von dem Bildschirm ausgestrahlte Lichtintensität (ID$_e$) in das Fahrzeug ausstrahlt,
  - Regulieren der Lichtquelle (29), so dass diese eine bestimmte, von dem Rand ausgestrahlte Lichtintensität (ID$_b$) in das Fahrzeug ausstrahlt,

wobei die von dem Bildschirm ausgestrahlte Lichtintensität (ID$_e$) und die von dem Rand ausgestrahlte Lichtintensität (ID$_b$) ausgewählt sind, so dass die folgende Gleichung erfüllt wird:

$$| (IR_e + ID_e) - (IR_b + ID_b) | \leq 10\% (IR_b + ID_b).$$

9. Verfahren zur Steuerung einer Inneneinrichtung gemäß irgendeinem der Ansprüchel bis 5 oder 7, **gekennzeichnet dadurch, dass** das Verfahren zumindest im Ruhezustand des elektronischen Anzeigebildschirms (7) durchgeführt wird und aufweisend die folgenden Schritte:

  - Ermitteln einer Intensität eines durch den Randbereich (12) reflektierten Lichts (IR$_b$),
  - Ermitteln einer Intensität eines durch den elektronischen Anzeigebildschirm (7) reflektierten Lichts (Ir$_e$),
  - Regulieren des elektronischen Anzeigebildschirms (7), so dass dieser eine bestimmte, von dem Bildschirm ausgestrahlte Lichtintensität (ID$_e$) in das Fahrzeug ausstrahlt,

wobei die von dem Bildschirm ausgestrahlte Lichtintensität (ID$_e$) ausgewählt ist, so dass die folgende Gleichung erfüllt wird:

$$| (IR_e + ID_e) - (IR_b) | \leq 10\% (IR_b).$$

**Claims**

1. A vehicle interior equipment, the interior equipment (1) comprising:

   - a structure (3) having a visible external surface (5), a window (9) being cut out in the external surface (5), the window (9) being surrounded by an edge area (12) of the external surface (5);
   - an electronic display screen (7) placed in the window (9) and having a peripheral area (14) adjacent to the edge area (12);
   - a device (13) for management of the electronic display screen (7);

   wherein the edge area (12) bears a visible decoration, the management device (13) being configured for selectively placing the electronic display screen (7) in an active condition in which information is displayed on the electronic display screen (7), or in a standby condition in which a decorative image is displayed on the electronic display screen (7), the decorative image being coordinated with the visible decoration so that at least the peripheral area (14) of the electronic display screen (7) and the edge area (12) coincide visually, **characterized in that** the interior equipment (1) comprises an optical film (23) having at least one first area (25) covering the edge area (12) and a second area (27) covering the electronic display screen (7), the first area (25) having a first light transmission rate, the second area (27) having a second light transmission rate of less than the first light transmission rate.

2. The vehicle interior equipment according to claim 1, **characterized in that** the management device (13) stores a plurality of decorative images different from each other, each may be displayed on the electronic display screen (7) in the standby condition.

3. The vehicle interior equipment according to anyone of the preceding claims, **characterized in that** the electronic display screen (7) is of the electronic paper type.

4. The vehicle interior equipment according to anyone of the preceding claims, **characterized in that** the interior equipment (1) comprises a light source (29) placed under the external surface (5) and laid out for diffusing light radiation through the external surface (5).

5. The vehicle interior equipment according to claim 4, **characterized in that** the management device (13) is configured for controlling the light source (29), so that the light source (29) diffuses into the vehicle a first edge-diffused light intensity when the electronic display screen (7) is in its active condition, and a second edge-diffused light intensity $(ID_b)$ greater than the first when the electronic display screen (7) is in its standby condition.

6. The vehicle interior equipment according to claim 4 or 5, **characterized in that** the management device (13) is configured for, at least in the standby condition of the electronic display screen (7) :

   - estimating a light intensity $(IR_b)$ reflected by the edge area (12);
   - estimating a light intensity $(IR_e)$ reflected by the electronic display screen (7);
   - regulating the electronic display screen (7) so that the latter diffuses into the vehicle a determined diffused screen light intensity $(ID_e)$;
   - regulating the light source (29) so that the latter diffuses into the vehicle a determined edge-diffused light intensity $(ID_b)$;

   the diffused screen light intensity $(ID_e)$ and the edge-diffused light intensity $(ID_b)$ being selected so that the following relationhip is satisfied:

   $$| (IR_e + ID_e) - (IR_b + ID_b) | \leq 10\% (IR_b + ID_b).$$

7. The vehicle interior equipment according to anyone of the claims 1 to 5, **characterized in that** the management device (13) is configured for, at least in the standby condition of the electronic display screen:

   - estimating a light intensity $(IR_b)$ reflected by the edge area (12);
   - estimating a light intensity $(IR_e)$ reflected by the electronic display screen (7);

- regulating the electronic display screen (7) so that the latter diffuses into the vehicle a determined diffused screen light intensity ($ID_e$);

the diffused screen light intensity ($ID_e$) being selected so that the following relationship is satisfied:

$$| (IR_e + ID_e) - (IR_b) | \leq 10\% (IR_b).$$

8. A method for managing an interior equipment according to anyone of the claims 4 to 6, **characterized in that** the method is applied at least in the standby condition of the electronic display screen (7), and comprising the following steps:

- estimating a light intensity ($IR_b$) reflected by the edge area (12);
- estimating a light intensity ($IR_e$) reflected by the electronic display screen (7);
- regulating the electronic display screen (7) so that the latter diffuses into the vehicle a determined diffused screen light intensity ($ID_e$);
- regulating the light source (29) so that the latter diffuses into the vehicle a determined edge-diffused light intensity ($ID_b$);

the diffused screen light intensity ($ID_e$) and the edge-diffused light intensity ($ID_b$) being selected so that the following relationship is satisfied:

$$| (IR_e + ID_e) - (IR_b + ID_b) | \leq 10\% (IR_b + ID_b).$$

9. A method for managing an interior equipment according to anyone of the claims 1 to 5 or 7, **characterized in that** the method is applied at least in the standby condition of the electronic display screen (7), and comprising the following steps:

- estimating a light intensity ($IR_b$) reflected by the edge area (12);
- estimating a light intensity ($IR_e$) reflected by the electronic display screen (7);
- regulating the electronic display screen (7) so that the latter emits in the vehicle a determined diffused screen light intensity ($ID_e$);

the diffused screen light intensity ($ID_e$) being selected so that the following relationship is satisfied:

$$| (IR_e + ID_e) - (IR_b) | \leq 10\% (IR_b).$$

FIG.1

FIG.2

**EP 3 178 688 B1**

**RÉFÉRENCES CITÉES DANS LA DESCRIPTION**

**Documents brevets cités dans la description**

- DE 102004010286 A1
- FR 2824510 A1